# FASCICULE DE BREVET EUROPEEN

(11) **EP 3 084 244 B1**
(45) Date de publication et mention de la délivrance du brevet: **29.11.2017**
(21) Numéro de dépôt: 14830613.7
(22) Date de dépôt: 09.12.2014
(51) Int. Cl.: F16D 1/104, F16D 1/108

(54) **SYSTEME D'ACCOUPLEMENT D'UNE MACHINE ENTRAINANTE AVEC UNE MACHINE ENTRAINEE**
SYSTEM ZUR KOPPLUNG EINES ANTRIEBSMASCHINE MIT EINER ANGETRIEBENEN MASCHINE
SYSTEM FOR COUPLING A DRIVING MACHINE WITH A DRIVEN MACHINE

(30) Priorité: 16.12.2013 FR 1362714
(43) Date de publication de la demande: 26.10.2016
(73) Titulaire: Moteurs Leroy-Somer, 16915 Angouleme Cedex 9 (FR)
(72) Inventeur: VOHLGEMUTH, Patrick, 16560 Anais (FR)
(74) Mandataire: Nony
(86) Numéro de dépôt international: PCT/IB2014/066724
(87) Numéro de publication internationale: WO 2015/092613

(56) Documents cités:
- WO-A1-2012/037347
- DE-A1- 10 136 172
- DE-A1-102010 033 076
- US-A- 2 738 210
- US-A1- 2013 221 954

## Description

La présente invention concerne un système d'accouplement d'une machine entraînante, notamment un moteur thermique, avec une machine entraînée, notamment un alternateur. Voir US 2738210 comme état de la technique plus proche. Certaines machines entraînées, notamment des alternateurs de type mono-palier, ont l'extrémité de leur rotor qui repose sur le palier de vilebrequin de la machine entraînante. L'interface entre le rotor et le vilebrequin se fait usuellement par des disques d'accouplement, notamment métalliques, centrés et fixés sur le volant d'inertie de la machine entraînante afin de permettre la transmission du couple et de compenser le désalignement. Le stator de l'alternateur est généralement fixé par une bride de raccordement sur le carter de la machine entraînante. Le raccordement et le centrage de la machine entraînée avec la machine entraînante se font par des ouvertures disposées sur la périphérie de la bride de raccordement. Les normes SAE (J617 et J620) imposent que la face du disque servant à la fixation et au centrage sur le volant soit déportée axialement vers l'intérieur du carter du moteur. Cela rend les opérations de raccordement et de centrage compliquées, du fait notamment de la faible visibilité et de l'accès difficile à ce disque.

L'invention vise à faciliter le raccordement d'une machine entraînée et d'une machine entraînante.

### Résumé

L'invention a pour objet de répondre à cet objectif et elle y parvient grâce à un système d'accouplement d'une machine entraînante, notamment un moteur thermique, avec une machine entrainée, notamment un alternateur, comportant :
- un disque de machine entraînante configuré pour se centrer et se fixer sur celle-ci selon un axe de rotation et comportant des premiers reliefs répartis angulairement autour de l'axe de rotation, et
- un disque de machine entraînée configuré pour se centrer et se fixer sur celle-ci selon l'axe de rotation et comportant des deuxièmes reliefs répartis angulairement autour de l'axe de rotation,
les deuxièmes reliefs étant disposés par rapport aux premiers reliefs de façon à permettre au système d'accouplement de prendre :
- une première configuration autorisant un éloignement axial selon l'axe de rotation des deux disques des machines entraînante et entraînée et dans laquelle les deux disques sont en contact, les premiers reliefs étant décalés angulairement par rapport aux deuxièmes reliefs, et
- une deuxième configuration pour la transmission du couple, dans laquelle les deuxièmes reliefs sont en prise avec les premiers reliefs et s'opposent au déplacement axial des deux disques l'un par rapport à l'autre,
le passage de la première à la deuxième configuration s'effectuant par une rotation des deux disques l'un par rapport à l'autre autour de l'axe de rotation.

L'invention permet de pouvoir fixer aisément un disque sur chaque machine avant leur assemblage. Le raccordement des disques se fait par un positionnement dans la première configuration puis la mise en marche de la machine entraînante. Cela provoque la rotation du disque de machine entraînante qui vient en prise par les premiers reliefs avec les deuxièmes reliefs du disque de machine entraînée. Les deux disques se fixent l'un sur l'autre et le disque de machine entraînante fait tourner le disque de machine entraînée en lui transmettant le couple de la machine entraînante.

De préférence, la machine entraînante est un moteur, notamment un moteur thermique, et la machine entraînée est un alternateur.

De préférence également, la machine entraînante tourne dans le sens antihoraire. La rotation du disque de machine entraînante par rapport au disque de machine entraînée pour passer de la première à la deuxième configuration se fait donc dans le sens antihoraire.

Le disque de la machine entraînée est, de préférence, fixé au rotor, notamment à l'arbre du rotor, de la machine entraînée par des éléments de fixation, notamment des vis, via des trous réalisés dans la partie interne du disque.

Le disque de la machine entraînante est, de préférence, fixé au volant d'inertie de la machine entraînante par des éléments de fixation, notamment des vis, via des trous réalisés dans la partie périphérique du disque.

Les disques sont de préférence en métal, notamment en acier.

Les deux disques peuvent présenter chacun une ouverture pour recevoir et centrer l'arbre de la machine entraînée.

Le disque destiné à la machine entraînante a, de préférence, un diamètre plus grand que celui du disque destiné à la machine entraînée. Cela facilite la fixation des disques aux machines entraînante et entraînée.

Au moins l'un des deux disques peut présenter un relief de centrage pour aligner les deux disques sur l'axe de rotation lors de leur rapprochement.

En particulier, les deux disques peuvent présenter chacun des reliefs de centrage, les reliefs de centrage se présentant sur l'un des disques sous la forme, en vue de face, d'au moins un renfoncement et sur l'autre des disques, en vue de face, d'au moins un relief en saillie s'ajustant dans le renfoncement.

Par « en vue de face », on comprend que l'utilisateur regarde le disque de face, du côté opposé à celui de la machine correspondante.

Les premiers et deuxièmes reliefs sont, de préférence, équirépartis angulairement autour de l'axe de rotation. Le nombre de premiers reliefs et le nombre de deuxièmes reliefs sont, de préférence, égaux et compris entre 2 et 20, mieux entre 4 et 12.

Dans la première configuration, de préférence, les premiers reliefs et les deuxièmes reliefs ne se superposent pas. La séparation angulaire des premiers et deuxièmes reliefs est suffisante pour éviter le chevauchement de ces derniers. Dans la deuxième configuration, les premiers reliefs se superposent préférentiellement au moins partiellement aux deuxièmes reliefs, lorsque les disques sont observés selon leur axe de rotation.

Les premiers reliefs sont, de préférence, obtenus par découpe et/ou emboutissage du disque de machine entraînante. Il en est de même des deuxièmes reliefs.

Les premiers reliefs peuvent se présenter sous la forme de crochets faisant saillie du côté du disque opposé à la machine entraînante. Ces crochets peuvent être orientés radialement vers l'intérieur ou orientés ortho-radialement. Par « orientés radialement vers l'intérieur », on comprend que les crochets sont dirigés vers l'axe de rotation. Par « orientés ortho-radialement », on comprend que les crochets sont chacun dirigés selon un axe perpendiculaire à un rayon du disque, dans le même sens circonférentiel.

De préférence, lorsqu'ils sont orientés radialement, les crochets sont ouverts à l'une de leurs extrémités circonférentielles, et fermés à leur extrémité opposée.

Les deuxièmes reliefs peuvent se présenter sous la forme de dents s'étendant radialement vers l'extérieur, notamment lorsque les premiers reliefs comportent des crochets orientés radialement. Les dents sont, de préférence, incurvées à leur extrémité vers le côté opposé à celui de la machine entraînée. De préférence, lors de la rotation du disque de machine entraînante par rapport au disque de machine entraînée, chaque dent s'engage dans l'ouverture du premier relief correspondant pour venir en prise avec ce dernier.

En variante, les deuxièmes reliefs peuvent se présenter sous forme de crochets faisant saillie du côté du disque opposé à la machine entraînée.

Ces crochets sont, de préférence, orientés ortho-radialement, notamment lorsque les premiers reliefs sont orientés également ortho-radialement. De préférence, les crochets sont orientés circonférentiellement dans le même sens que les premiers reliefs en vue de face, pour permettre leur venue en prise avec les premiers reliefs par une rotation des deux disques entre eux.

Les premiers et/ou les deuxièmes reliefs présentent, de préférence, des reliefs de verrouillage tendant à s'opposer à une rotation des disques l'un par rapport à l'autre dans le sens d'un désaccouplage des premiers et deuxièmes reliefs. Ce ou ces reliefs de verrouillage peuvent comporter des stries ou crans. En variante, le ou les reliefs de verrouillage présents sur l'un des premiers et des deuxièmes reliefs comportent chacun une languette. L'autre disque comporte un ou plusieurs logements destinés à recevoir chacun une languette.

La languette est de préférence formée par une découpe du relief qui s'engage lors de l'assemblage des deux disques, dans la découpe définissant le logement formé par l'autre des premier et deuxième reliefs, pour se bloquer contre le bord de la découpe.

De préférence, les premiers et deuxièmes reliefs comportent chacun un corps dont une face est destinée à contacter une face du corps de l'autre relief en correspondance. Cette face peut présenter dans le sens circonférentiel une pente croissante formant un angle compris entre 2° et 10° avec le plan médian du disque correspondant. A la manière d'un coin, une telle pente facilite l'obtention d'une liaison sans jeu entre les premiers et deuxièmes reliefs correspondants, dans la deuxième configuration du système d'accouplement.

L'invention a encore pour objet un groupe de production d'électricité, comportant :
- un moteur, notamment thermique,
- un alternateur comportant un rotor entraîné en rotation par le moteur,
- un système d'accouplement du moteur avec l'alternateur tel que décrit ci-dessus, assurant la transmission du couple entre le moteur et l'alternateur, le disque de machine entrainante étant fixé sur le moteur, notamment sur un volant d'inertie du moteur, et le disque de machine entrainée étant fixé sur le rotor de l'alternateur.

L'invention a aussi pour objet un procédé d'assemblage d'un groupe de production d'électricité, comportant les étapes consistant à :
- fixer le disque selon l'invention de machine entrainante à un volant d'inertie du moteur,
- fixer le disque selon l'invention de machine entrainée au rotor de l'alternateur,
- rapprocher axialement les deux disques pour les amener dans la première configuration du système d'accouplement selon l'invention, et
- mettre en marche le moteur pour que les deuxièmes reliefs viennent en prise par rotation des deux disques entre eux, avec les premiers reliefs selon la deuxième configuration du système d'accouplement.

Les fixations des deux disques sur les machines entraînante et entraînée se font avant l'assemblage du moteur et de l'alternateur.

L'invention pourra être mieux comprise à la lecture de la description détaillée qui va suivre, d'exemples de mise en oeuvre non limitatifs de celle-ci, ainsi qu'à l'examen du dessin annexé, sur lequel :
- la figure 1 est une coupe, schématique et partielle, d'un groupe de production d'électricité selon l'invention,
- la figure 2 est une vue en perspective d'un exemple de disque de machine entraînante selon l'invention,
- la figure 3 est une vue en coupe du disque de la figure 2,
- la figure 4 est une vue en perspective d'un disque de machine entraînée selon l'invention,
- la figure 5 est une vue en coupe du disque de la figure 4,
- la figure 6 est une vue en coupe d'un système d'accouplement selon l'invention,
- la figure 7 représente en perspective une variante de disque de machine entraînante,
- la figure 8 est une section partielle selon VIII-VIII de la figure 7,
- la figure 9 est une vue en perspective d'une variante de disque de machine entraînée,
- la figure 10 est une vue partielle en coupe selon X-X de la figure 9,
- la figure 11 représente un détail d'un système d'accouplement en coupe selon un plan orthoradial des disques,
- la figure 12 est une vue analogue à la figure 11 d'une variante de réalisation,
- la figure 13 est une vue en perspective de l'assemblage de la figure 12,
- la figure 14 est une vue en coupe selon XIV-XIV de l'assemblage de la figure 12, et
- la figure 15 est une vue, partielle et en perspective, d'un exemple de relief de disque selon l'invention.

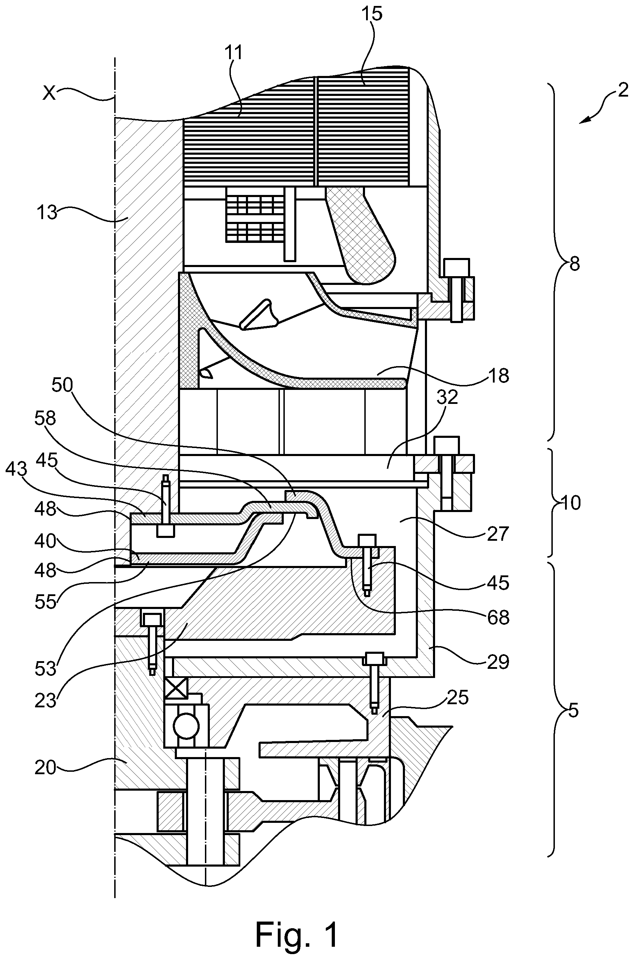

Le groupe 2 de production d'électricité selon l'invention, représenté partiellement sur la figure 1, comporte une machine entraînante 5, notamment un moteur thermique, et une machine entraînée 8, notamment un alternateur, mise en rotation par la machine entraînante 5. La machine entraînante 5 et la machine entraînée 8 sont raccordées par un système d'accouplement 10 qui assure la transmission du couple de la machine entraînante à la machine entraînée.

La machine entraînante 5 comporte par exemple, comme illustré, un vilebrequin 20, entraîné en rotation lorsque la machine entraînante 5 est en fonctionnement, sur lequel se fixe rigidement un volant d'inertie 23, mobile relativement au carter 25 de la machine.

La machine entraînée 8 comporte un rotor 11 dont l'arbre 13 tourne relativement à un stator 15. L'arbre 13 porte un ventilateur 18 permettant de faire circuler de l'air dans la machine entraînée 8.

Le système de raccordement 10 est disposé entre la machine entraînée 8 et la machine entraînante 5, à l'intérieur d'un espace 27, délimité latéralement par une jupe tubulaire de raccordement 29 (encore appelée cloche), portée par le carter 25 de la machine entraînante 5, et fixée à une bride 32 de la machine entraînée.

Le système de raccordement 10 comporte un disque 40 de machine entraînante, fixé au volant d'inertie 23 de la machine entraînante 5, et un disque 43 de machine entraînée, fixé à l'arbre 13.

Les disques 40 et 43 s'étendent généralement perpendiculairement à l'axe de rotation X.

Le disque 40 est fixé au volet 23 par des vis 45, disposées à la partie périphérique 68 du disque.

Le diamètre du disque 40 de machine entraînante est, de préférence, supérieur au diamètre *D* du disque 43 de machine entraînée pour que les têtes de vis 45 dépassent de la partie périphérique 68 du disque de machine entraînante et n'empêchent pas le rapprochement des deux disques 40 et 43 lors de l'assemblage.

Le disque 43 est fixé à l'arbre 13 par des vis 45, disposées à proximité de l'axe de rotation X.

Le disque 40 présente des premiers reliefs 50 et le disque 43 comporte des deuxièmes reliefs 53 qui viennent en prise avec les premiers reliefs 50 pour assurer la transmission du couple.

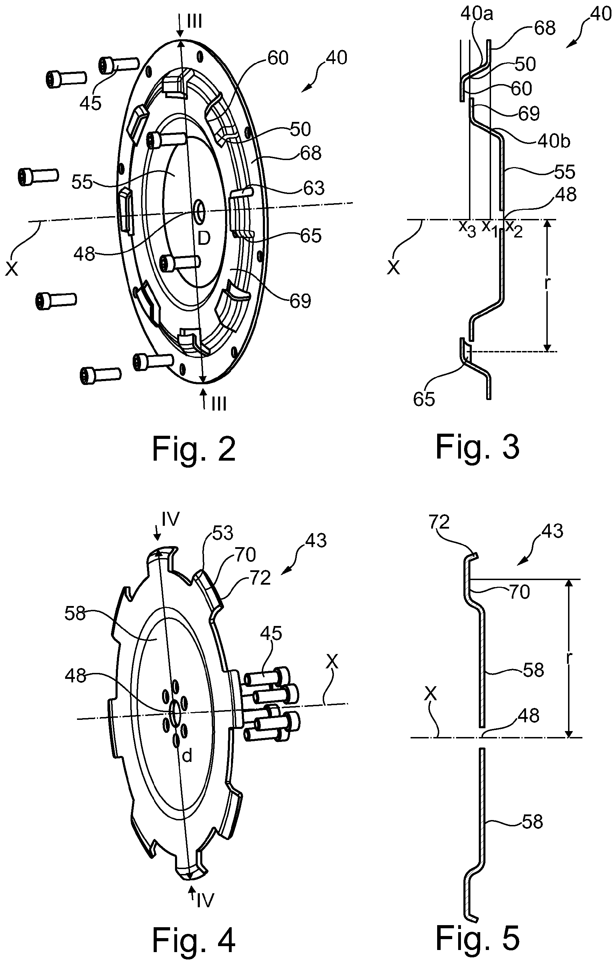

Les premiers reliefs 50 et les deuxièmes reliefs 53 sont, de préférence, équirépartis angulairement autour de l'axe de rotation X, comme visible sur les figures 2 et 4.

Le nombre *n₁* de premiers reliefs 50 est de préférence égal au nombre *n₂* de deuxièmes reliefs, avec *n₁* et *n₂* compris de préférence entre 2 et 20, mieux entre 4 et 12.

Les disques 40 et 43 présentent chacun en leur centre une ouverture 48 destinée à recevoir et centrer l'extrémité de l'arbre 13.

En variante, les disques 40 et 43 présentent chacun une extension de centrage, non représentée, permettant le bon positionnement des disques 40 et 43 au sein du groupe 2 de production d'électricité.

Les disques 40 et 43 présentent des reliefs de centrage facilitant l'alignement des deux disques 40 et 43 sur l'axe de rotation.

Le disque 40 peut présenter, comme visible sur la figure 2, un relief de centrage 55 destiné à recevoir un relief de centrage 58 présent sur le disque 43. Le relief 55 peut être sous forme d'un renfoncement et le relief 58 sous la forme d'un bossage, l'inverse étant possible. Les formes des reliefs de centrage 55 et 58 permettent une rotation relative des deux disques 40 et 43 entre eux, selon un angle suffisant pour permettre aux premiers et deuxièmes reliefs 50 et 53 de venir en prise les uns avec les autres.

Comme illustré sur la figure 1, le relief de centrage 55 peut également permettre de loger les têtes des vis 45 dépassant du côté opposé à la machine entraînée 8 du disque 43.

Comme illustré sur la figure 2, les premiers reliefs 50 peuvent se présenter sous la forme de crochets 60 faisant saillie du côté opposé à la machine entraînante 5 et orientés radialement vers l'axe de rotation X.

Ces crochets 60 sont, de préférence, réalisés par découpe et emboutissage du disque de machine entraînante 40.

Les crochets 60 présentent, de préférence, une dimension circonférentielle plus grande que la dimension radiale. Les crochets 60 ont, de préférence, l'une 63 de leurs extrémités circonférentielles qui est ouverte et l'autre 65 qui est fermée

Comme visible en coupe sur la figure 3, le disque de machine entraînante 40 peut s'étendre par portions selon des plans d'abscisses différentes sur l'axe de rotation X. La périphérie 68 du disque peut s'étendre sur un plan d'abscisse x₁ comprise entre l'abscisse x₂ du fond du renfoncement 55 et l'abscisse x₃ du plan de contact 69 entre les deux disques 40 et 43.

Le plan de contact 69 et le renfoncement 55 peuvent être reliés par une première portion tronconique 40b. La périphérie 68 du disque, et le plan de contact 69, peuvent être reliés par une deuxième portion tronconique 40a.

Les premiers reliefs 50 font, de préférence, saillis par rapport au plan de contact d'abscisse x₃ d'une hauteur h comprise entre 3 mm et 12mm.

Comme illustré sur les figures 4 et 5, les deuxièmes reliefs 53 peuvent se présenter sous la forme de dents 70 s'étendant radialement vers l'extérieur, à la périphérie du disque 43.

Les dents 70 ont leur extrémité radialement extérieure 72 incurvée du côté opposé à la machine entraînée 8, de façon à épouser la forme de la portion tronconique 40a du disque 40.

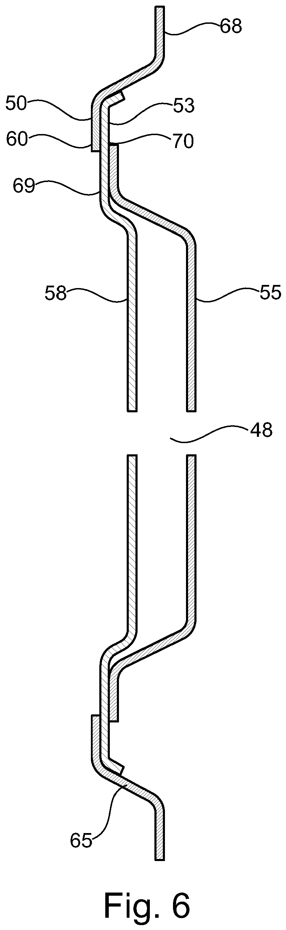

Lors de l'assemblage, les disques 40 et 43 sont amenés au contact par le plan 69 avec les premiers reliefs 50 et les deuxièmes reliefs 53 angulairement décalés. Le disque 40 est ensuite mis en rotation par la mise en marche de la machine entraînante 5, afin que les premiers reliefs 50 viennent en prise avec les deuxièmes reliefs 53 correspondants, comme illustré sur la figure 6. Lors de la rotation relative des deux disques 40 et 43, les dents 70 s'engagent par les extrémités ouvertes 63 dans les crochets 60 et se bloquent à l'intérieur de ceux-ci. Les disques 40 et 43 deviennent alors solidaires et le couple de la machine entraînante 5 peut être transmis à la machine entraînée 8.

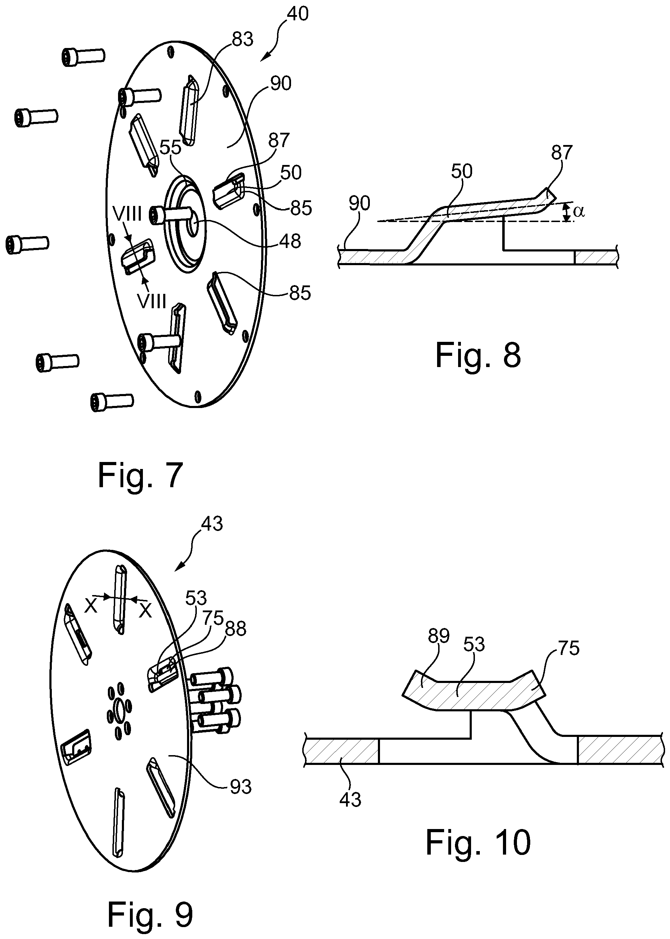

Les figures 7 à 10 illustrent des variantes de disques 40 et 43 qui diffèrent des disques illustrés sur les figures 1 à 6 notamment par la forme et la disposition des premiers et deuxièmes reliefs 50 et 53.

Les premiers reliefs 50 sont ici orientés ortho-radialement, et leur dimension radiale est plus grande que leur dimension circonférentielle.

Les premiers reliefs 50 se présentent sous la forme de crochets 83 au moins partiellement fermés à leurs deux extrémités radiales 85.

Les deuxièmes reliefs 53 se présentent sous forme de crochets 88 orientés ortho-radialement et, de préférence, orientés du même côté que les crochets 83 lorsque les deux disques 40 et 43 sont vus de face.

Les crochets 83 et 88 peuvent être chacun incurvés à leur extrémité libre 87 et 89 vers l'extérieur du disque correspondant 40 ou 43, de façon à épouser la forme du relief correspondant sur l'autre disque.

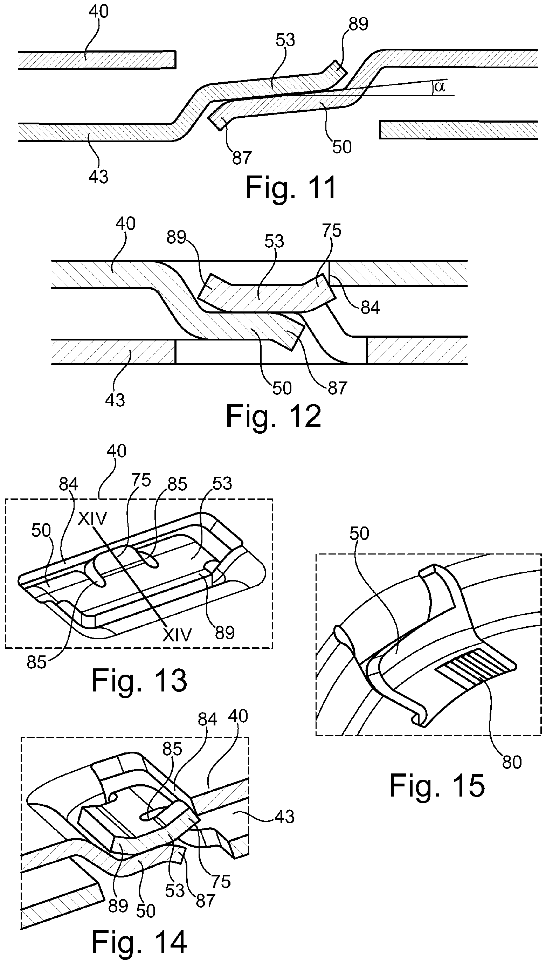

Lors de l'assemblage, les premiers reliefs 50 viennent au contact de la surface 93 du disque 43 donnant du côté opposé à la machine entraînée et les deuxièmes reliefs 53 viennent au contact de la surface 90 du disque 40 donnant du côté opposé à la machine entraînante, les premiers reliefs 50 et les deuxièmes reliefs 53 étant angulairement décalés. Le disque 40 est ensuite mis en rotation, et les premiers reliefs 50 viennent en prise avec les deuxièmes reliefs 53 correspondants, comme illustré sur la figure 11.

Les disques 40 et 43 ne comportent ici pas de reliefs de centrage venant en emboîtement.

Le disque 40 s'étend, de préférence, selon deux plans parallèles entre eux, le premier définissant la surface de contact 90 avec les deuxièmes reliefs 53 lors de l'assemblage des deux disques 40 et 43 et le deuxième plan correspondant au fond du renfoncement 55. Le renfoncement 55 reçoit les têtes des vis de fixation du disque 43 à l'arbre 13 dépassant du côté opposé à la machine entraînée 8 pour éviter que ces dernières ne gênent la mise en contact des disques 40 et 43.

De préférence, comme illustré sur les figures 8, 10 et 11, les premiers reliefs 50 et/ou les deuxièmes reliefs 53 présentent chacun une pente dans le sens circonférentiel formant un angle *α* compris entre 2° et 10° par rapport à un plan perpendiculaire à l'axe X. Une telle pente facilite l'obtention d'une liaison sans jeu entre les reliefs 50 et 53.

Le couple délivré par la machine entraînante 5 est variable et entraîne des accélérations et décélérations régulières des disques 40 et 43. Du fait de l'inertie de rotation du rotor de l'alternateur, lors des phases de décélération, les disques tendent à se désolidariser.

De préférence, les premiers reliefs 50 et/ou les deuxièmes reliefs 53 présentent des reliefs de verrouillage qui assurent un blocage du disque de machine entraînée 43 par rapport au disque de machine entraînante afin d'éviter le désaccouplement des deux disques 40 et 43 durant les phases de décélération.

Comme illustré sur les figures 12 et 13, les reliefs de verrouillage peuvent comporter au moins une languette 75 sur l'un des premiers reliefs 50 et des deuxièmes reliefs 53, et sur l'autre des premiers reliefs 50 et des deuxièmes reliefs 53 un logement 78 destiné à recevoir cette languette 75.

Dans l'exemple illustré figures 12 à 14, le logement 78 est défini par découpe et emboutissage des deuxièmes reliefs 53. La languette 75 est formée par découpe du deuxième relief 53 du côté opposé à celui de l'extrémité libre 89 entre deux gorges 85 formées par découpe, notamment réalisées sur le deuxième disque 43 avant emboutissage.

La languette 75 est incurvée du côté extérieur à la machine entraînée 8. Lors de l'assemblage, le deuxième relief 53 vient en prise avec les premiers reliefs 50 en s'insérant dans le logement 78. La languette 75 s'insère également dans le logement 78 et vient se plaquer contre le bord 84 du premier disque 40 faisant face au premier relief 50. Ainsi, en cas de rotation inverse, les deuxièmes reliefs 53 sont bloqués par la languette 75 et ne peuvent pas se désengager des premiers reliefs 50. Les disques 40 et 43 ne se désaccouplent pas. Dans la variante illustrée sur la figure 15, les reliefs de verrouillage comportent des stries ou des crans 80 orientés radialement, sur les faces en contact des premiers et deuxièmes reliefs. Ces crans 80 peuvent, du fait de leur forme, être franchis par les crans du relief opposé lors de l'assemblage des disques. Par contre, les dents formées par ces crans tendent à s'opposer au mouvement inverse.

L'invention n'est pas limitée aux exemples qui viennent d'être décrits, et en particulier n'est pas limitée à une forme particulière de centrage des disques.

Les premiers et deuxièmes reliefs peuvent être de toute autre forme permettant leur venue en prise, par exemple avoir la forme de portions d'arcs de cercle non concentriques à l'axe de rotation.

Les reliefs de verrouillage peuvent être autres que ceux décrits, par exemple les reliefs de verrouillage peuvent être réalisés sous forme de protubérances disposées sur l'un des disques qui viennent se loger dans des renfoncements disposés sur l'autre disque.

## Revendications

1. Système d'accouplement (10) d'une machine entraînante (5), notamment un moteur thermique, avec une machine entrainée (8), notamment un alternateur, comportant :
- un disque (40) de machine entraînante configuré pour se centrer et se fixer sur celle-ci selon un axe de rotation (X) et comportant des premiers reliefs (50) répartis angulairement autour de l'axe de rotation (X), et
- un disque (43) de machine entraînée configuré pour se centrer et se fixer sur celle-ci selon l'axe de rotation (X) et comportant des deuxièmes reliefs (53) répartis angulairement autour de l'axe de rotation (X),
les deuxièmes reliefs (53) étant disposés par rapport aux premiers reliefs (50) de façon à permettre au système d'accouplement (10) de prendre :
- une première configuration autorisant un éloignement axial selon l'axe de rotation (X) des deux disques (40, 43) des machines entraînante et entraînée et dans laquelle les deux disques (40, 43) sont en contact, **caractérisé en ce que** les premiers reliefs (50) étant décalés angulairement par rapport aux deuxièmes reliefs (53), et
- une deuxième configuration pour la transmission du couple, dans laquelle les deuxièmes reliefs (53) sont en prise avec les premiers reliefs (50) et s'opposent au déplacement axial des deux disques (40, 43) l'un par rapport à l'autre,
le passage de la première à la deuxième configuration s'effectuant par une rotation des deux disques (40,43) l'un par rapport à l'autre autour de l'axe de rotation (X).

2. Système d'accouplement selon la revendication 1, les premiers reliefs (50) étant obtenus par découpe et/ou emboutissage du disque (40) de machine entraînante et/ou les deuxièmes reliefs (53) étant obtenus par découpe et/ou emboutissage du disque (43) de machine entraînée.

3. Système d'accouplement selon l'une quelconque des revendications précédentes, les deuxièmes reliefs (53) étant sous forme de crochets (88) faisant saillie du côté du disque (43) opposé à la machine entraînée (8) ou étant sous la forme de dents (70) s'étendant radialement vers l'extérieur.

4. Système d'accouplement selon l'une quelconque des revendications précédentes, les premiers reliefs (50) étant sous la forme de crochets (60) faisant saillie du côté du disque (40) opposé à la machine entraînante (5).

5. Système d'accouplement selon la revendication 4, les crochets (60) étant orientés radialement vers l'intérieur et, de préférence, étant ouverts à l'une (63) de leurs extrémités circonférentielles et fermés à leur extrémité opposée (65).

6. Système d'accouplement selon la revendication 4, les crochets (60) étant orientés ortho-radialement.

7. Système d'accouplement selon l'une quelconque des revendications précédentes, les premiers et/ou les deuxièmes reliefs (50, 53) présentant des reliefs de verrouillage tendant à s'opposer à une rotation des disques (40, 43) l'un par rapport à l'autre dans le sens d'un désaccouplage des premiers et deuxièmes reliefs (50, 53).

8. Système d'accouplement selon la revendication 7, le ou les reliefs de verrouillage comportant des stries ou crans (80).

9. Système d'accouplement selon la revendication 7, le ou les reliefs de verrouillage présents sur l'un des premiers et des deuxièmes reliefs (50 ; 53) comportant une languette (75) et le ou les reliefs de verrouillage présents sur l'autre des premiers et des deuxièmes reliefs (50 ; 53) comportant un logement (78) destiné à recevoir la languette (75).

10. Système d'accouplement selon la revendication 9, la languette (75) étant formée par une découpe de l'un des premiers et deuxièmes reliefs (50 ; 53) et s'engageant, lors de l'assemblage des deux disques (40 ; 43), dans la découpe définissant l'autre des premiers ou deuxième reliefs (50 ; 53) pour se bloquer contre le bord (84) de la découpe.

11. Système d'accouplement selon l'une quelconque des revendications précédentes, les premiers et deuxièmes reliefs (50, 53) comportant chacun un corps dont une face interne est destinée à contacter une face interne du corps de l'autre relief (50,53) en correspondance et présente, de préférence, une pente croissante dans le sens circonférentiel, formant un angle α compris entre 2° et 10° avec le plan médian du disque.

12. Système d'accouplement selon l'une quelconque des revendications précédentes, les deux disques (40, 43) présentant chacun une ouverture (48) pour recevoir et centrer l'arbre (13) de la machine entrainée et/ou un relief de centrage pour au moins l'un des deux disques (40, 43) pour aligner les deux disques (40, 43) sur l'axe de rotation (X) lors de leur rapprochement.

13. Système d'accouplement selon l'une quelconque des revendications précédentes, les deux disques (40, 43) présentant des reliefs de centrage, les reliefs de centrage comportant sur l'un des disques (40, 43), en vue de face, au moins un renfoncement (55) et sur l'autre des disques (40, 43), en vue de face, au moins un relief (58) en saillie s'ajustant dans le renfoncement (55).

14. Groupe de production d'électricité comportant :
- un moteur, notamment thermique,
- un alternateur comportant un rotor entrainé en rotation par le moteur,
- un système d'accouplement (10) du moteur avec l'alternateur tel que défini à l'une quelconque des revendications 1 à 13, assurant la transmission du couple entre le moteur et l'alternateur, le disque (40) de machine entrainante étant fixé sur le moteur, notamment sur un volant d'inertie (23) du moteur, et le disque (43) de machine entrainée étant fixé sur le rotor (11) de l'alternateur.

15. Procédé d'assemblage d'un groupe de production d'électricité selon la revendication 14, comportant les étapes consistant à :
- fixer le disque (40) de machine entrainante à un volant d'inertie (23) du moteur,
- fixer le disque (43) de machine entrainée au rotor (11) de l'alternateur,
- rapprocher axialement les deux disques (40,43) pour les amener dans la première configuration du système d'accouplement (10), et
- mettre en marche le moteur pour que les deuxièmes reliefs (53) viennent en prise par rotation des deux disques (40, 43) entre eux, avec les premiers reliefs (50) selon la deuxième configuration du système d'accouplement (10).

## Patentansprüche

1. System (10) zur Kopplung einer antreibenden Maschine (5), insbesondere einer Wärmekraftmaschine, an eine angetriebene Maschine (8), insbesondere eine Lichtmaschine, mit:
- einer Scheibe (40) der antreibenden Maschine, welche Scheibe (40) dazu konfiguriert ist, sich auf eine Drehachse (X) der antreibenden Maschine zu zentrieren und sich daran zu fixieren, und erste Reliefs aufweist, die um die Drehachse (X) herum verteilt sind, und
- einer Scheibe (43) der angetriebenen Maschine, welche Scheibe dazu konfiguriert ist, sich auf die Drehachse (X) zu zentrieren und daran zu fixieren, und zweite Reliefs (53) aufweist, die um die Drehachse (X) herum verteilt sind,
wobei die zweiten Reliefs (53) so in Bezug auf die ersten Reliefs (50) angeordnet sind, dass sie es dem Kopplungssystem (10) erlauben, die folgenden Konfigurationen einzunehmen:
- eine erste Konfiguration, in der beiden Scheiben (40, 43) der antreibenden Maschine und der angetriebenen Maschine längs der Drehachse (X) axial auseinander treten können und in der die beiden Scheiben (40, 43) miteinander in Berührung stehen, **dadurch gekennzeichnet, dass** die ersten Reliefs (50) in Umfangsrichtung gegenüber dem zweiten Relief (53) versetzt sind, und
- eine zweite Konfiguration für die Übertragung des Drehmoments, in der die zweiten Reliefs (53) mit den ersten Reliefs (50) in Eingriff stehen und der axialen Verschiebung der beiden Scheiben (40, 43) relativ zueinander entgegenwirken,
wobei der Übergang von der erste Konfiguration in die zweite Konfiguration durch eine Drehung der beiden Scheiben (40, 43) relativ zueinander um die Drehachse (X) erfolgt.

2. System nach Anspruch 1, bei dem die ersten Reliefs (50) durch Stanzen und/oder Prägen der Scheibe (40) der antreibenden Maschine gebildet sind und/oder die zweiten Reliefs (53) durch Stanzen und/oder Prägen der Scheibe (43) der angetriebenen Maschine gebildet sind.

3. System nach einem der vorstehenden Ansprüche, bei dem die zweiten Reliefs (53) die Form von Haken (88) haben, die von der Seite der Scheibe (43) vorspringen, die der angetriebenen Maschine (8) gegenüberliegt, oder die Form von Zähnen (70) haben, die sich radial nach innen erstrecken.

4. System nach einem der vorstehenden Ansprüche, bei dem die ersten Reliefs (50) die Form von Haken (60) haben, die von der Seite der Scheibe (40) vorspringen, die der antreibenden Maschine (5) gegenüberliegt.

5. System nach Anspruch 4, bei dem die Haken (60) radial nach innen gerichtet sind und vorzugsweise an einem (63) ihrer in Umfangsrichtung liegenden Enden offen und am entgegengesetzten Ende (65) geschlossen sind.

6. System nach Anspruch 4, bei dem die Haken (60) ortho-radial orientiert sind.

7. System nach einem der vorstehenden Ansprüche, bei dem die ersten und/oder zweiten Reliefs (50, 53) Verriegelungsreliefs bilden, die die Tendenz haben, einer Drehung der Scheiben (40, 43) relativ zueinander im Drehsinn einer Entkopplung der ersten und zweiten Reliefs (50, 53) entgegenzuwirken.

8. System nach Anspruch 7, bei dem die Verriegelungsreliefs Riefelungen oder Schlitze (80) aufweisen.

9. System nach Anspruch 7, bei dem die Verriegelungsreliefs an einem der ersten und zweiten Reliefs (50; 53) eine Zunge (75) aufweisen und die Verriegelungsreliefs an dem anderen der ersten und zweiten Reliefs (50; 53) eine Aufnahme (78) aufweisen, die dazu bestimmt ist, die Zunge (75) aufzunehmen.

10. System nach Anspruch 9, bei dem die Zunge (75) durch einen Ausschnitt des einen der ersten und zweiten Reliefs (50; 53) gebildet ist und beim Zusammenbau der beiden Scheiben (40; 43) in den Ausschnitt eingreift, der das andere der ersten oder zweiten Reliefs (50; 53) bildet, um am Rand (84) dieses Ausschnitts zu blockieren.

11. System nach einem der vorstehenden Ansprüche, bei dem die ersten und zweiten Reliefs (50, 53) jeweils einen Körper haben, dessen Innenseite dazu bestimmt ist, mit einer Innenseite des Körpers des entsprechenden anderen Reliefs (50, 53) in Berührung zu kommen und vorzugsweise eine in Umfangsrichtung ansteigende Schräge bildet, die mit der Medianebene der Scheibe einen Winkel α zwischen 2° und 10° bildet.

12. System nach einem der vorstehenden Ansprüche, bei dem die beiden Scheiben (40, 43) jeweils eine Öffnung (48) zur Aufnahme und Zentrierung der Welle (13) der angetriebenen Maschine aufweisen und/oder ein Zentrierungsrelief für wenigstens eine der beiden Scheiben (40, 43), um die beiden Scheiben (40, 43) bei ihrer Annäherung auf der Drehachse (X) auszurichten.

13. System nach einem der vorstehenden Ansprüche, bei dem die beiden Scheiben (40, 43) Zentrierungsreliefs haben, wobei die Zentrierungsreliefs an einer der Scheiben (40, 43), in der Frontansicht, wenigstens eine Vertiefung (55) und an der anderen der Scheiben (40, 43), in der Frontansicht, wenigstens ein vorspringendes Relief (58) haben, das sich in der Vertiefung (55) ausrichtet.

14. Elektrischer Generator:
- einem Motor, insbesondere einer Wärmekraftmaschine,
- einer Lichtmaschine, die einen durch den Motor zur Drehung angetriebenen Rotor aufweist,
- einem Kopplungssystems (10) zur Kopplung des Motors mit der Lichtmaschine nach einem der Ansprüche 1 bis 13, der die Übertragung des Drehmoments zwischen dem Motor und der Lichtmaschine sicherstellt, wobei die Scheibe (40) der antreibenden Maschine an dem Motor befestigt ist, insbesondere an einem Schwungrad (23) des Motors, und die Scheibe (43) der angetriebenen Maschine an dem Rotor (11) der Lichtmaschine befestigt ist.

15. Verfahren zur Herstellung eines elektrischen Generators nach Anspruch 14, mit den folgenden Schritten:
- Befestigen der Scheibe (50) der antreibenden Maschine an einem Schwungrad (23) des Motors,
- Befestigen der Scheibe (43) der angetriebenen Maschine an den Rotor (11) der Lichtmaschine,
- axiale Annäherung der beiden Scheiben (40, 43) aneinander, um sie in die erste Konfiguration des Kopplungssystems (10) zu bringen, und
- Starten des Motors, damit die zweiten Reliefs (53) durch Drehung der beiden Scheiben (40, 43) relativ zueinander mit den ersten Reliefs (50) gemäß der zweiten Konfiguration des Kopplungssystems (10) in Eingriff kommen.

## Claims

1. A system (10) for coupling a driving machine (5), in particular a thermal engine, with a driven machine (8), in particular an alternator, comprising:
- a driving machine disk (40) that is designed to be centered on and attached to same along an axis of rotation (X) and that includes first reliefs (50) distributed angularly about the axis of rotation (X), and
- a driven machine disk (43) that is designed to be centered on and attached to same along the axis of rotation (X) and that includes second reliefs (53) distributed angularly about the axis of rotation (X),
the second reliefs (53) being arranged in relation to the first reliefs (50) such as to enable the coupling system (10) to adopt:
- a first arrangement enabling an axial separation along the axis of rotation (X) of the two disks (40, 43) of the driving and driven machines and in which the two disks (40, 43) are in contact, **characterized by** the first reliefs (50) being angularly offset in relation to the second reliefs (53), and
- a second arrangement for transmitting torque, in which the second reliefs (53) engage with the first reliefs (50) and oppose the axial movement of the two disks (40, 43) relative to one another,
the shift from the first to the second arrangement being made by a reciprocal rotation of the two disks (40, 43) about the axis of rotation (X).

2. The coupling system as claimed in claim 1, **characterized in that** the first reliefs (50) are obtained by cutting and/or stamping the driving machine disk (40) and/or **in that** the second reliefs (53) are obtained by cutting and/or stamping the driven machine disk (43).

3. The coupling system as claimed in any one of the preceding claims, **characterized in that** the second reliefs (53) are hooks (88) projecting from the side of the disk (43) opposite the driven machine (8) or teeth (70) extending radially outwards.

4. The coupling system as claimed in any one of the preceding claims, **characterized in that** the first reliefs (50) are hooks (60) projecting from the side of the disk (40) opposite the driving machine (5).

5. The coupling system as claimed in claim 4, **characterized in that** the hooks (60) are oriented radially inwards and preferably open at one of the circumferential extremities (63) of same and closed at the opposite extremity (65) of same.

6. The coupling system as claimed in claim 4, **characterized in that** the hooks (60) are oriented orthoradially.

7. The coupling system as claimed in any one of the preceding claims, **characterized in that** the first and/or second reliefs (50, 53) have locking reliefs tending to oppose reciprocal rotation of the disks (40, 43) in the uncoupling direction of the first and second reliefs (50, 53).

8. The coupling system as claimed in claim 7, **characterized in that** the locking relief or reliefs include slots or notches (80).

9. The coupling system as claimed in claim 7, **characterized in that** the locking relief or reliefs present on either the first or second relief (50; 53) include a tab (75) and the locking relief or reliefs present on the other of the first or second reliefs (50; 53) include a seat (78) designed to receive the tab (75).

10. The coupling system as claimed in claim 9, **characterized in that** the tab (75) is cut out from either the first or second relief (50; 53) and engages, when the two disks (40; 43) are assembled, in the cutout defining the other of the first or second relief (50; 53) to lock against the edge (84) of the cutout.

11. The coupling system as claimed in any one of the preceding claims, **characterized in that** the first and second reliefs (50, 53) each have a body with an internal face designed to come into contact with an internal face of the body of the other corresponding relief (50, 53) and preferably have an incline increasing around the circumference forming an angle *α* of between 2° and 10° with the midplane of the disk.

12. The coupling system as claimed in any one of the preceding claims, **characterized in that** the two disks (40, 43) each have an opening (48) designed to receive and center the shaft (13) of the driven machine and/or a centering relief for at least one of the two disks (40, 43) to align the two disks (40, 43) on the axis of rotation (X) when same are being brought together.

13. The coupling system as claimed in any one of the preceding claims, **characterized in that** the two disks (40, 43) have centering reliefs, the centering reliefs comprising on one of the disks (40, 43), as seen from the front, at least one recess (55) and on the other disk (40, 43), as seen from the front, at least one projection (58) that fits into the recess (55).

14. An electricity generator including:
- an engine, in particular a thermal engine,
- an alternator including a rotor driven in rotation by the engine,
- a system (10) for coupling the engine with the alternator as defined in any one of claims 1 to 13, transmitting torque between the engine and the alternator, the driving machine disk (40) being attached to the engine, in particular to a flywheel (23) of the engine, and the driven machine disk (43) being attached to the rotor (11) of the alternator.

15. A method for assembling an electricity generator as claimed in claim 14, including the following steps:
- attaching the driving machine disk (40) to a flywheel (23) of the engine,
- attaching the driven machine disk (43) to the rotor (11) of the alternator,
- moving the two disks (40, 43) towards one another axially to create the first arrangement of the coupling system (10), and
- starting the engine so that the second reliefs (53) engage by reciprocal rotation of the two disks (40, 43) with the first relief (50) in the second arrangement of the coupling system (10).
